# EUROPÄISCHE PATENTSCHRIFT

(11) **EP 0 424 354 B1**
(45) Veröffentlichungstag und Bekanntmachung des Hinweises auf die Patenterteilung: **26.04.1995**
(21) Anmeldenummer: 90890275.2
(22) Anmeldetag: 11.10.1990
(51) Int. Cl.: C21C 5/46

(54) **Stahlwerkskonverter**
Converter vessel for making steel
Convertisseur d'aciérie

(30) Priorität: 14.10.1989 DE 3934340
(43) Veröffentlichungstag der Anmeldung: 24.04.1991
(73) Patentinhaber: VOEST-ALPINE Industrieanlagenbau GmbH, A-4020 Linz (AT)
(72) Erfinder: Auer, Johann, Ing., A-4490 St. Florian (AT); Pirklbauer, Wilfried, Dr., A-4491 Niederneukirchen 199 (AT); Ramaseder, Norbert, Dipl.-Ing., A-4020 Linz (AT); Smejkal, Hellmuth, Ing., A-4030 Linz (AT)
(74) Vertreter: Wolfram, Gustav, Dipl.-Ing.

(56) Entgegenhaltungen:
- EP-A- 0 079 290
- EP-A- 0 162 949
- AT-B- 257 665
- AT-B- 266 892
- DE-A- 2 503 052
- DE-A- 3 321 118
- DE-C- 2 427 190
- DE-C- 3 301 466

## Beschreibung

Die Erfindung betrifft einen Stahlwerkskonverter mit einer feuerfesten Ausmauerung und einer eine Wandung des Konverters durchsetzenden Sondenöffnung zum Einfuhren einer Meß- und/oder Probenahmesonde.

Ein Konverter dieser Art ist aus der EP-B - 0 079 290 bekannt. Die Sondenöffnung soll ein rasches Einbringen einer Sonde zum Zweck einer Probenahme oder zum Zweck einer Temperaturmessung oder sonstigen Messung eines Parameters ermöglichen. Eine eigene Öffnung für die Sonde ist insbesonders dann zweckmäßig, wenn der Tiegelmund des Konverters nur schwer zugänglich ist.

Die feuerfeste Ausmauerung eines Stahlwerkskonverters besteht in der Regel aus Magnesit-Steinen, so daß die die Wandung des Konverters durchsetzende Sondenöffnung eine von diesen Magnesit-Steinen gebildete Innenwand aufweist. Es hat sich in der Praxis gezeigt, daß es immer wieder zu einem Zuwachsen von Sondenöffnungen dieser Art kommt , da sich Schlackenablagerungen bilden, die mit den Magnesit-Steinen besonders stabile Verbindungen eingehen. Eine Entfernung dieser Ablagerungen ist zwar durch Aufbohren der Sondenöffnung möglich, was jedoch oft eine Beschädigung der Ausmauerung des metallurgischen Gefäßes nach sich zieht und zudem sehr zeitaufwendig ist. Da jedoch Messungen möglichst rasch durchgeführt werden sollen, ist eine nur schwierig durchführbare Reinigung der Sondenöffnung vor Durchführung der Messung besonders nachteilig.

Ein metallurgisches Gefäß, insbesondere ein Elektroschmelzofen, mit einer in seiner feuerfest ausgekleideten Wandung vorgesehen Öffnung, in die wahlweise ein Zusatzbrenner oder ein Verschlußstopfen z.B. aus Graphit eingesetzt werden kann, ist beschrieben in DE-A-3 321 118. Die Öffnung des Gefäßes ist mit einer Hülse z.B. aus Graphit ausgekleidet, welde die Ablagerung von Spritzern von Schlacke und/oder Schmelze unterdrücken soll. Die Graphithülse ist in einen wassergekühlten Mantel eingefügt, mit weldem sie eine in das feuerfeste Material der Auskleidung des Gefäßes eingebaute Einheit bildet.

Die Erfindung bezweckt die Vermeidung des Zusetzens der Sondenöffnung und stellt sich die Aufgabe einen Stahlwerkskonverter der eingangs beschriebenen Art zu schaffen, dessen Sondenöffnung, wenn überhaupt, nur minimal verlegtwird, wobei sich eventuelle Ansätze von Schlacke sehr einfach und rasch entfernen lassen.

Diese Aufgabe wird erfindungsgemäß dadurch gelost, daß die Sondenöffnung mit einer Auskleidung aus Graphit oder aus einem Graphit/Tonerde-Gemisch versehen ist, welche mit ihrer Außenfläche unmittelbar am Feuerfestmaterial der Ausmauerung anliegt und wobei das innere Ende der Auskleidung mindestens bis in einen Bereich der feuerfesten Ausmauerung mit einer Temperatur von etwa 1200°C nagt.

Es hat sich gezeigt, daß sich die Schlacke am Graphit nur schwer ansetzen kann und daß ein eventueller Schlackenansatz problemlos z.B. mit einem Handräumer entfernt werden kann.

Die beim Herstellen von Stahl verwendete Schlacke erstarrt unterhalb von etwa 1200°C, sodaß der Graphit bzw. das Graphit/Tonerde-Gemisch von außen bis in einen Bereich ragend vorzusehen ist, der mindestens diese Temperatur aufweist.

Vorteilhaft ragt das innere Ende der Auskleidung höchstens bis in einen Bereich der feuerfesten Ausmauerung mit einer Temperatur von etwa 1300°C. Da die Schlacke über etwa 1200°C flüssig ist, fließt in Bereichen der feuerfesten Ausmauerung, bei denen Temperaturen über diesem Wert erreicht werden, die Schlacke von der Ausmauerung selbständig ab, sodaß in diesen Bereichen Magnesitsteine ausreichen. Zwecks Materialeinsparung und zwecks Vermeidung einer hohen Temperaturbelastung des Graphits bzw. Graphit/Tonerde-Gemisches ist daher die erfindungsgemäße Auskleidung nicht bis in das Gefäßinnere geführt.

Gemäß einer bevorzugten Ausführungsform ist die Auskleidung als Rohr ausgebildet, wodurch sich der Einbau besonders einfach gestaltet.

Um einen guten Sitz des Rohres und damit eine lange Haltbarkeit desselben zu gewährleisten, ist vorteilhaft das innenseitige Ende des Rohres an einer Schulter eines feuerfesten Ausmauerungssteines des metallurgischen Gefäßes abgestützt.

Um axiale Bewegungen des Rohres, die temperaturbedingt oder durch Bewegungen des Ausmauerungsmaterials bedingt sein können, ohne Zerstörung des Rohres zu ermöglichen, ist vorteilhaft das außenseitige Ende des Rohres gegenüber dem Mantel des metallurgischen Gefäßes mittels einer feuerfesten Stampfmasse abgestützt.

Da Graphit üblicherweise mit Sauerstoff reagiert und beim Stahlwerkskonverter während des Blasvorganges Sauerstoff im Überschuß vorhanden ist, ist zweckmäßig die Sondenöffnung mit einem Deckel verschließbar. Hierdurch werden der Zutritt von Luft von außen und der Durchtritt von Sauerstoff von innen durch die Sondenöffnung sowie hierdurch bedingte Beeinträchtigungen der Graphitauskleidung vermieden. Der Deckel hat zudem noch den Vorteil, daß Flammen und Rauchgase durch die Sondenöffnung nicht nach außen dringen können.

Zweckmäßig ist der Deckel am Mantel des metallurgischen Gefäßes schwenkbar befestigt, wobei vorteilhaft der Deckel mittels eines Druckmittelzylinders betätigbar ist.

Um ein Schließen des Deckels bei Kippbewegungen des Konverters zu gewährleisten, ist zweckmäßig der Deckel mittels eines Riegels fixierbar, der vorzugsweise ebenfalls mittels eines Druckmittelzylinders betätigbar ist.

Eine bevorzugte Ausführungsform ist dadurch gekennzeichnet, daß das Rohr sich etwa über die gesamte Länge der Sondenöffnung bis zum Innenraum des metallurgischen Gefäßes erstreckt und aus zwei oder mehr Rohrteilen zusammengesetzt ist, wobei die zueinander gerichteten Enden der Rohrteile mit einander in Richtung quer zur Längsachse zumindest teilweise überdeckenden Stirnflächen versehen sind. Die mehrteilige Ausbildung des Rohres gestattet Bewegungen des Ausmauerungsmaterials quer zur Achse der Sondenöffnung, ohne daß es zu einem Bruch des Rohres und einem seitlichen Versatz der durch einen Bruch gebildeten Teile kommen kann. Ein solcher seitlicher Versatz eines Teiles eines Rohres behindert das Einführen der Sonde durch die Sondenöffnung.

Bewegungen der Ausmauerungsmaterialien, wie des Verschleißfutters - dessen Bewegungen an der Gefäßinnenwand am größten sind -, bewirken bei der oben beschriebenen bevorzugten Ausführungsform des Rohres lediglich eine Schwenkbewegung eines Rohrteiles gegenüber dem anschließenden Rohrteil, wodurch die Sondenöffnung zwar eine leicht geknickte Achse aufweist; jedoch wird ein Versatz eines Rohrteiles gegenüber dem anderen, der im Inneren der Sondenöffnung eine die Einführbewegung der Sonde verhindernde Stufe erzeugen würde, zuverlässig vermieden.

Dadurch, daß das Rohr bis zum Innenraum des metallurgischen Gefäßes ragt, wird weiters ein mögliches Anlegen von Schlacke am Übergang von Graphit- zu Magnesitstein, welcher vor dem Einführen einer Sonde geräumt werden müßte, verhindert.

Eine besonders zweckmäßige Ausführungsform ist dadurch gekennzeichnet, daß die Stirnflächen als Kegelmantelflächen ausgebildet sind, deren Erzeugende mit der Längsachse einen Winkel zwischen 30 und 60°, vorzugsweise einen Winkel von 45°, einschließen.

Hierbei weisen vorteilhaft die Kegelmantelflächen zweier zueinander gewendeter Endteile der Rohrteile denselben Öffnungswinkel auf und ist die Spitze des die Kegelmantelflächen bildenden Kegels zum Innenraum des metallurgischen Gefäßes gerichtet. Hierdurch ist eine gute Beweglichkeit der Rohrteile gegeneinander gewährleistet und ein eventuell zwischen den Rohrteilen auftretender Spalt ist dem Einführen einer Sonde durch die Neigung des Spaltes in Richtung zum Inneren des metallurgischen Gefäßes nicht hinderlich.

Um die Rohrteile einwandfrei im feuerfesten Futter des metallurgischen Gefäßes abzustützen und zu verankern, ist vorteilhaft der dem Innenraum des metallurgischen Gefäßes nächstliegende Rohrteil außenseitig mit einem eine Stützschulter bildenden Ringwulst versehen.

Bevorzugt weisen die Rohrteile zylindrische Innenräume auf und ist der Innendurchmesser eines näher dem Innenraum des metallurgischen Gefäßes angeordneten Rohrteiles größer bemessen als der Innendurchmesser eines weiter außen liegenden Rohrteiles, wodurch ein geringerseitlicher Versatz eines Rohrteiles bzw. eine Änderung der Neigung eines Rohrteiles gegenüber dem benachbarten für das Einführen der Sonde ohne Belang ist.

Hierbei beträgt zweckmäßig der Innendurchmessersprung von Rohr- zu Rohrteil zwischen 1 bis 3 cm, vorzugsweise etwa 2 cm.

Eine Schlackenfreihaltung der Sondenöffnung läßt sich gemäß einer weiteren Ausführungsform der Erfindung dadurch erzielen, daß in die Sondenöffnung ein Stopfen aus Graphit oder aus einem Graphit/Tonerde-Gemisch einsetzbar und in eingesetzter Stellung fixierbar ist.

Vorzugsweise ragt das innere Stopfenende mindestens bis in einen Bereich der feuerfesten Ausmauerung mit einer Temperatur von etwa 1200°C und höchstens bis in einen Bereich mit einer Temperatur von etwa 1300°C.

Um eine einfache Betätigung des Stopfens zu ermöglichen, ist dieser an einer Führungsstange befestigt, an der im Abstand zum Stopfen ein am Außenmantel des metallurgischen Gefäßes anliegender Anschlag vorgesehen ist.

Um die Lage des Stopfens an unterschiedliche Betriebsbedingungen anpassen zu können, ist vorteilhaft der Anschlag entlang der Führungsstange verschiebbar und an der Führungsstange fixierbar.

Zweckmäßig ist der Anschlag als Deckel ausgebildet , wodurch ein Gasdurchgang durch die Sondenöffnung, der infolge des Spiels zwischen Stopfen und Sondenöffnung möglich wäre, vermieden wird.

Um ein einfaches Einsetzen des Deckels zu gewährleisten ist vorteilhaft der Anschlag an der zum Inneren des metallurgischen Gefäßes gewendeten Seite mit einem Zentrierfortsatz versehen.

Der Anschlag ist zweckmäßig mittels eines Riegels, der vorzugsweise mittels eines Druckmittelzylinders betätigbar ist, am Mantel des metallurgischen Gefäßes fixierbar.

Vorteilhaft ist die Führungsstange mittels eines Druckmittelzylinders betätigbar, sodaß Manipulationen für das Heben und Senken des Stopfens nicht erforderlich sind.

Eine bevorzugte Ausführungsform mit einem Stopfen ist dadurch gekennzeichnet, daß sich der Stopfen über die gesamte Länge des Stichloches erstreckt, wobei zweckmäßig das der Gefäßinnenseite des metallurgischen Gefäßes zugewandte Ende des Stopfens eine dieser Gefäßinnenseite angepaßte Stirnfläche aufweist.

Durch das Vorsehen eines bis an die Innenseite des metallurgischen Gefäßes ragenden Stopfenswird das Eindringen von Schlacke in die Sondenöffnung und ein eventueller Ansatz von Schlacke an der feuerfesten Auskleidung der Sondenöffnung zuverlässig verhindert.

Ein Stopfen dieser Art bietet besondere Vorteile, wenn das Sondenloch für längere Zeit verschlossen bleiben soll. Ein Stopfen aus feuerfestem Material würde sich durch Ausbildung von Schlackenansätzen zwischen Stopfen und Ausmauerung nur mehr schwer lösen lassen; es käme zum Ausbrechen von Ausmauerungsmaterial, was durch den Graphitstopfen verhindert wird.

Vorteilhaft ist das nach außen ragende Ende des Stopfens mit einem metallischen Einsatz versehen, der eine Kupplungseinrichtung zum Ankuppeln einer Stopfenmanipulationseinrichtung aufweist. Die Kupplungseinrichtung kann beispielsweise als Bohrung mit Innengewinde ausgebildet sein, in welches Gewinde eine Manipulationsstange einschraubbar ist.

Zweckmäßig weist der metallische Einsatz einen die Sondenöffnung übergreifenden Ringwulst auf. Dieser Ringwulst bildet eine Art Deckel, so daß auch der dünne Spalt zwischen Stopfen und Sondenöffnung nach außen abgedeckt ist. Gleichzeitig dient dieser Wulst als Stütze für den Stopfen, so daß dieser seine richtige Position in der Sondenöffnung einnimmt.

Vorzugsweise ist der Außendurchmesser des Stopfens um etwa 3 bis 15 %, insbesondere 5 %, geringer bemessen als der Innendurchmesser der Sondenöffnung.

Gemäß einer bevorzugten Ausführungsform besteht bei Verwendung eines Rohres aus einem Graphit/Tonerde-Gemisch dieses aus 60 bis 85 % Graphit, Rest Al₂O₃ und Schamotte.

Bei Verwendung eines Stopfens aus einem Graphit/Tonerde-Gemisch besteht dieser aus 5 bis 20 % Graphit, 30 bis 70 % Al₂O₃, Rest Schamotte.

Die Erfindung beruht auf der Idee, in dem Bereich der Sondenöffnung, in dem sich Schlacke ansetzen könnte, Graphit bzw. ein Graphit/Tonerde-Gemisch vorzusehen. Im Falle einer rohrförmigen Graphitauskleidung erstreckt sich der Graphitbereich von einem Bereich der Ausmauerung, in dem die Schlacke mit Sicherheit flüssig ist, bis nahe zum außenseitigen Ende der Sondenöffnung; im Falle des Vorsehens eines Stopfens genügt es, das innere Stopfenende, welches bis in den oben angegebenen Bereich eingesetzt wird, aus Graphit bzw. Graphit/Tonerde-Gemisch zu fertigen.

Beide Varianten ermöglichen den Verschleiß der feuerfesten Ausmauerung des metallurgischen Gefäßes wie bisher, ohne die Schutzfunktion vor Schlackenansätzen zu verlieren.

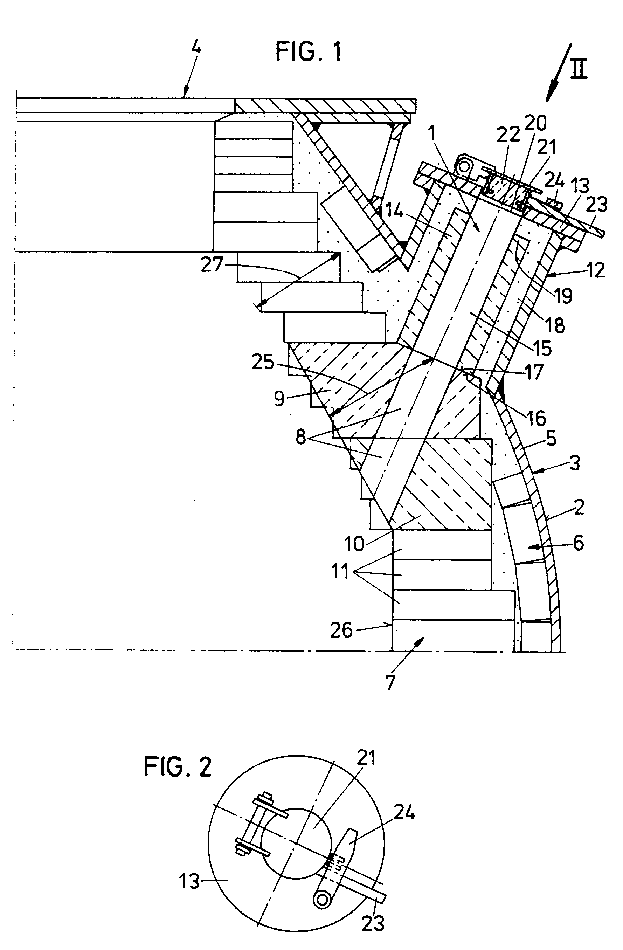

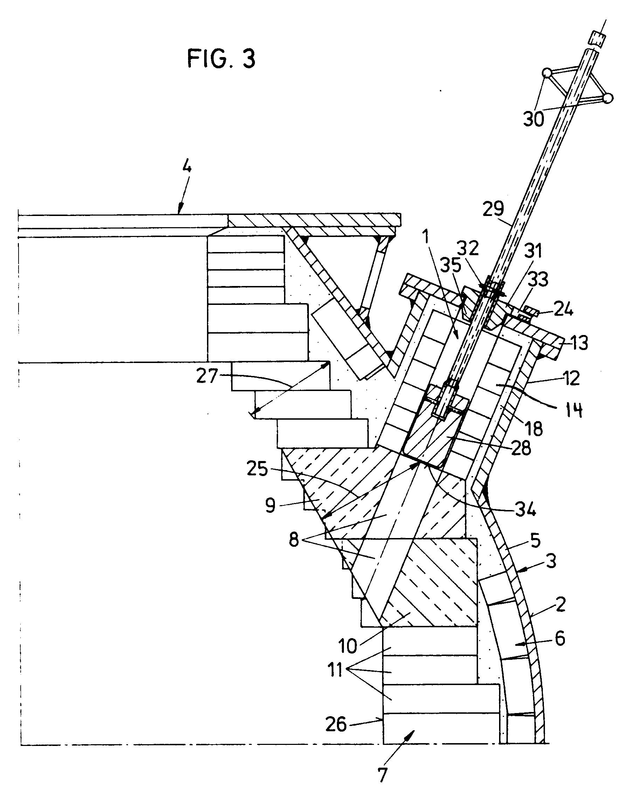

Die Erfindung ist nachfolgend anhand der Zeichnung an mehreren Ausführungsbeispielen näher erläutert, wobei Fig. 1 einen Teilschnitt durch einen Stahlwerkskonverter, dessen Schnittebene durch die Drehachse des Stahlwerkskonverter gelegt ist, gemäß einer ersten Ausführungsform, zeigt. Fig. 2 ist eine Draufsicht von Fig. 1 in Richtung des Pfeiles II. In den Fig. 3,4 und 5 sind in jeweils zu Fig. 1 analogen Darstellungen weitere Ausführungsformen veranschaulicht.

Gemäß der in Fig. 1 dargestellten Ausführungsform durchsetzt eine Sondenöffnung 1 zum Ein- und Ausbringen einer Mess- und/oder Probenahmesonde die Wandung 2 eines metallurgischen Gefäßes 3, wie eines Stahlwerkskonverters, in der Nähe der Mündung 4 desselben. Die Wandung 2 des Stahlwerkskonverters 3 ist von einem Mantel 5 aus Stahl gebildet, an dem innenseitig ein Dauerfutter 6 angeordnet ist. Das Dauerfutter 6 ist von einem feuerfesten Verschleißfutter 7 bedeckt. Im Bereich der Sondenöffnung 1 ist das Verschleißfutter 7 von zwei von einer Bohrung 8 durchsetzten Steinen 9, 10 gebildet, deren Abmessungen größer sind als die der benachbarten Ausmauerungssteine 11 des Verschleißfutters 7. Sämtliche Steine 9, 10, 11 des Verschleißfutters 7 sind aus Magnesit mit folgender Zusammensetzung gebildet:

| | |
|---|---|
| MgO | 97 % |
| Al₂O₃ | 0,1 % |
| Fe₂O₃ | 0,2 % |
| CaO | 1,9 % |
| SiO₂ | 0,5 % |

Im Bereich der Sondenöffnung 1 ist am Mantel 2 des Konverters 3 ein Stutzen 12 aus Stahl mit einer flanschartig vorspringenden Stirnplatte 13 eingeschweißt. Im Inneren dieses Stutzens ist ein Rohr 14 aus Graphit angeordnet, wobei der Innenraum 15 des Rohres fluchtend zu der die beiden Ausmauerungssteine 9, 10 mit größerer Dicke durchsetzenden Bohrung 8 angeordnet ist. Das Graphitrohr 14 stützt sich mit seinem inneren Ende 16 an einer Schulter 17 des oberen 9 der beiden Ausmauerungssteine 9, 10 ab und ist peripher von einer feuerfesten Stampfmasse 18 umgeben, die den Ringraum zwischen dem Mantel des Stutzens 12 und dem Rohr 14 ausgefüllt. Diese Stampfmasse 18 erstreckt sich auch zwischen dem außenseitigen Ende 19 des Rohres 14 und der Stirnplatte 13 des Stutzens 12. Hierdurch kann das Rohr temperaturbedingte bzw. durch Bewegungen der feuerfesten Ausmauerung 7 verursachte Axialverschiebungen durchführen, ohne daß es zu großen Druckkräften ausgesetzt wird, die zu einer Zerstörung des Rohres 14 führen könnten. Eine zentrale Öffnung 20 der Stirnplatte ist fluchtend zum Innenraum 15 des Rohres 14 angeordnet.

Das Graphitrohr 14 weist einen Außendurchmesser auf, der etwa dem doppelten des Innendurchmessers entspricht, sodaß es eine genügend große Stabilität aufweist. Das Graphitrohr 14 muß nicht einstückig ausgebildet sein, es kann auch aus mehreren in axialer Richtung übereinander angeordneten Graphitringen gebildet sein.

An der Stirnplatte 13 des Stutzens 12 ist ein Deckel 21 schwenkbar befestigt. Der Deckel ist topfartig ausgebildet, wobei das Innere des Deckels mit feuerfester Masse 22 ausgekleidet und dem Konverterinneren zugewendet ist. An dem Deckel 21 ist ein Fortsatz 23 vorgesehen, der ein manuelles Schwenken des Deckels 21 ermöglicht. Dieser Fortsatz 23 ist von einem ebenfallsschwenkbar an der Stirnplatte 13 des Stutzens 12 angeordneten Riegel 24 übergreifbar, sodaß der Deckel 21 in geschlossener Position fixiert werden kann. Zum Verschwenken des Deckels 21 und des Riegels 24 könnten auch druckmittelbetätigte Zylinder vorgesehen sein.

Wie insbesondere aus Fig. 1 ersichtlich ist, liegt das innere Ende 16 des Graphitrohres 14 in einer Entfernung 25 der vom Verschleißfutter 7 gebildeten Innenwand 26 des Konverters, die etwa der Dicke 27 des Verschleißfutters 7 eines neu ausgemauerten Konverters 3 entspricht, sodaß das Graphitrohr 14 auch am Ende einer Konverterreise , wenn das Verschleißfutter 7 nahezu abgebrannt ist, noch immer gut abgestützt ist. Die Temperatur der Ausmauerung liegt im Bereich des inneren Endes 16 des Graphitrohres 14 etwa zwischen 1.200 und 1.300°C, sodaß Schlacke, die in die Bohrung 8 der beiden gelochten Ausmauerungssteine 9, 10 eindringt, infolge des flüssigen Zustandes der Schlacke in diesem Temperaturbereich nicht an den Ausmauerungssteinen 9, 10 anhaften kann, sondern von diesen wiederum abfließt. Am Graphitrohr 14, dessen Temperatur unterhalb des Schmelzpunktes der Schlacke liegt, kann sich Schlacke nicht festsetzen. Eventuell im Inneren 15 des Rohres 14 erstarrende Schlacke läßt sich, da diese nur schlecht am Rohr 14 anhaftet, mühelos mit einem Handräumer entfernen.

Gemäß der in Fig. 3 dargestellten Ausführungsform ist das feuerfeste Verschleißfutter 7 des Konverters bis zur Stirnplatte 13 des Stutzens 12 geführt und zur Bildung einer Sondenöffnung 1 durchbohrt. Das Festsetzen von Schlacke wird gemäß dieser Ausführungsform durch einen Stopfen 28 aus Graphit verhindert. Dieser Stopfen ist am Ende einer Führungsstange 29 befestigt. Mit dieser Führungsstange 29 kann der Stopfen manuell aus der Bohrung 8 entfernt oder in diese eingebracht werden. Zu diesem Zweck ist die Führungsstange mit Handgriffen 30 versehen. Anstelle einer manuellen Bedienung könnte auch ein Druckmittelzylinder zum Aus- und Einbringen des Stopfens 28 vorgesehen sein.

An der Führungsstange 29 ist ein Deckel 31 zum Verschließen der Sondenöffnung 1 verschiebbar angeordnet. Er kann mit einem Splint 32 oder einer Stellschraube an der Führungsstange 29 in unterschiedlichen Entfernungen vom Stopfen fixiert werden . Der Deckel 31 ist mit einem Fortsatz 33 versehen, der von einem Riegel 24 ähnlich dem in den Fig. 1 und 2 dargestellten Riegel übergriffen werden kann, sodaß der Deckel 31 an der Stirnplatte 13 des Stutzens 12 fixiert ist. Hierdurch ist der Stopfen 28 im Inneren 8 der Sondenöffnung 1 fixiert und bleibt beim Verschwenken des Konverters an Ort und Stelle.

Der Deckel 31 dient somit als Anschlag zur Einhaltung einer bestimmten Position des Stopfens 28 im Inneren 8 der Sondenöffnung 1. Wie aus Fig. 3 ersichtlich ist, befindet sich die Stirnfläche 34 des Stopfens 28 in einer Distanz 25 von der Innenwand 26, die etwa der Dicke 27 des Verschleißfutters 7 entspricht. Auch hier beträgt die Temperatur an der Stirnfläche 34 des Stopfens im Inneren der Sondenöffnung etwa 1.200 bis 1.300°C, sodaß ein Festsetzen von Schlacke nicht stattfinden kann. Der Deckel 31 weist zwecks Zentrierung der Führungsstange 29 einen in das Innere 8 der Sondenöffnung 1 ragenden Zentrierfortsatz 35 auf, dessen Außendurchmesser nur geringfügig kleiner bemessen ist, als der Innendurchmesser der Sondenöffnung 1.

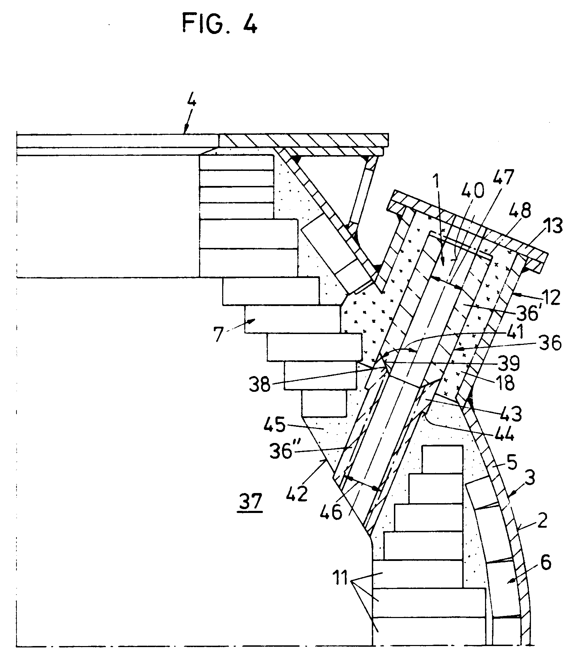

Gemäß Fig. 4 erstreckt sich ein aus Graphit bzw. aus Graphit/Tonerde-Gemisch gebildete Rohr 36 etwa über die gesamte Länge der Sondenöffnung 1 und ragt bis zum Innenraum 37 des metallurgischen Gefäßes 3. Es ist aus zwei Teilen 36', 36'' zusammengesetzt; es könnte jedoch für besonders lange Sondenöffnungen 1 auch aus mehr als zwei Teilen gebildet sein.

Die an den zueinander gerichteten Enden der Rohrteile 36', 36'' vorgesehenen Stirnflächen 38, 39 sind als Kegelmantelflächen ausgebildet, wodurch die Rohrteile 36', 36'' in Richtung quer zur Längsachse 40 der Sondenöffnung 1 gegeneinander gegen Verschieben fixiert sind. Der Winkel 41 einer Kegelmantelerzeugenden zur Längsachse 40 eines Rohrteiles 36', 36'' Iiegt zweckmäßig zwischen 30 und 60°. Bei Versuchen hat sich ein Winkel 41 von 45° als besonders vorteilhaft erwiesen. Ist der Winkel 41 zu steil oder zu flach, kann es zu einem Ausbrechen von Teilen eines Rohrteiles 36', 36'' kommen.

Kommt es zu einem Verschieben des Verschleißfutters 7 - diese Verschiebung ist an der Gefäßinnenseite 42 am größten - gegenüber dem Dauerfutter 6, wird der innere Rohrteil 36'', also der bis zum Innenraum 37 des metallurgischen Gefäßes 3 ragende Rohrteil 36'', gegenüber dem äußeren Rohrteil 36' derart bewegt, daß es zu einer Winkelabweichung der Achsen der Rohrteile 36', 36'' kommt. Ein Verschieben der beiden Rohrteile gegeneinander quer zur Längsachse 40 ist jedoch nicht möglich, da sich die aneinandergrenzenden Stirnflächen 38, 39 der Rohrteile 36', 36'' in Richtung quer zur Längsachse 40 überdecken und hierdurch in dieser Richtung aneinander abstutzen. Anstelle der Kegelmantelflächen 38, 39 wären auch andere Stirnflächenformen denkbar, beispielsweise eine sphärische Fläche oder eine stufenartige Ausbildung der Stirnflächen.

Der dem Innenraum des metallurgischen Gefäßes 3 nächstliegende Rohrteil 36'' weist an seinem nach außen gerichteten Ende einen Ringwulst 43 auf, der eine Stützschulter 44 bildet, mit der er an der feuerfesten Stampfmasse 45, die diesen Rohrteil 36'' umgibt, abgestützt und gehalten ist.

Um auch ein geringfügiges Vortreten einer Kante des Rohrteiles 36'' zu verhindern, wenn dieser Rohrteil 36'' durch ein Wandern des Verschleißfutters 7 gegenüber dem Dauerfutter 6 bewegtwird, ist zweckmäßig, wie in Fig. 4 mitstrichpunktierten Linien dargestellt, der Innendurchmesser 46 des näher zum Innenraum 37 des metallurgischen Gefäßes 3 angeordneten Rohrteiles 36'' geringfügig größer bemessen als der Innendurchmesser 47 des benachbarten, nach außen anschließenden Rohrteiles 36'. Der Durchmessersprung liegt zweckmäßig in der Größenordnung von 2 cm.

Eine axiale Längsverschiebung der Rohrteile 36', 36'' kann durch eine entsprechende Freistellung 48 beim äußeren Endbereich des außenseitigen Rohrteiles 36' ermöglicht werden, wie dies in Fig. 4 ebenfalls mit strichpunktierten Linien dargestellt ist. Bei der in Fig. 4 dargestellten Ausführungsform kann ebenso, wie in Fig. 1 dargestellt, ein Deckel 21 vorgesehen sein.

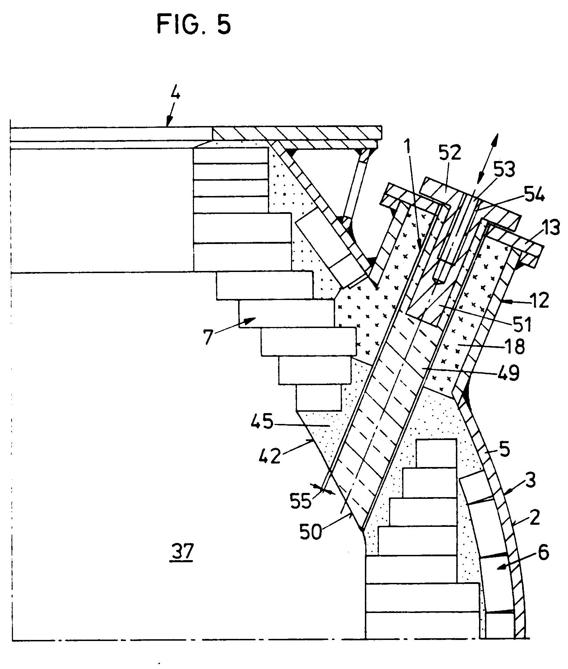

Gemäß der in Fig. 5 dargestellten Ausführungsform ist die Sondenöffnung 1 mit einem Graphitrohr 14 (Fig. 1, 3) oder 36 (Fig. 4) ausgekleidet, welches in Fig. 5 nicht dargestellt ist. Das Graphitrohr ist von feuerfester Stampfmasse 18, 45 umgeben, die über die gesamte Länge der Sondenöffnung 1 reicht. In die Sondenöffnung 1 ist ein Stopfen 49 aus Graphit oder aus einem Graphit/Tonerde-Gemisch eingesetzt, der sich über die gesamte Länge der Sondenöffnung 1 erstreckt und dessen inneres Ende 50 der Form der Gefäßinnenseite 42 angepaßt ist, so daß der Stopfen 49 im wesentlichen keinen Vorsprung an der Gefäßinnenseite 42 des metallurgischen Gefäßes 3 bildet.

Am äußeren Ende des Stopfens 49 ist ein metallischer Einsatz 51 in diesen eingearbeitet, der einen die Sondenöffnung 1 übergreifenden Ringwulst 52 bildet und hierdurch den Stopfen 49 durch Anliegen des Ringwulstes 52 an der Stirnplatte 13 des Stutzens 12 in richtiger Position hält. In den Einsatz 51 ist eine Bohrung 53 mit einem Innengewinde 54 eingearbeitet, so daß eine Manipulationseinrichtung zum Entfernen bzw. Einsetzen des Stopfens 49 aus der bzw. in die Sondenöffnung 1 ankuppelbar ist. Der Stopfen 49 weist gegenüber der Sondenöffnung 1 ein seitliches Spiel 55 auf, welches vorzugsweise etwa 2,5 % des Durchmessers der Sondenöffnung 1 beträgt.

Das Rohr bzw. der Stopfen können aus reinem Graphit (Reinheitsgrad 99,9 %) gebildet sein. Es kann jedoch auch ein Graphit/Tonerde-Gemisch Verwendung finden, das im Falle des Stopfens 28 aus 5 - 20 % Graphit, 30 - 60 % Al₂O₃. Rest Schamotte und im Falle des Rohres aus 60 - 85 % Graphit, Rest Al₂O₃ und Schamotte besteht.

## Patentansprüche

1. Stahlwerkskonverter (3), mit einer feuerfesten Ausmauerung (6, 7, 18) und einer eine Wandung (2) des Konverters durchsetzenden Sondenöffnung (1) zum Einführen einer Meß- und/oder Probenahmesonde, dadurch gekennzeichnet, daß die Sondenöffnung (1) mit einer Auskleidung (14, 36) aus Graphit oder aus einem Graphit/Tonerde-Gemisch, welche mit ihrer Außenfläche unmittelbar am Feuerfestmaterial der Ausmauerung anliegt, versehen ist und wobei das innere Ende (16) der Auskleidung (14) mindestens bis in einen Bereich der feuerfesten Ausmauerung (6, 7, 18) mit einer Temperatur von etwa 1200°C ragt.

2. Stahlwerkskonverter nach Anspruch 1, dadurch gekennzeichnet, daß das innere Ende (16) der Auskleidung (14) höchstens bis in einen Bereich derfeuerfesten Ausmauerung (6, 7, 18) mit einer Temperatur von etwa 1300°C ragt (Fig. 1,2).

3. Stahlwerkskonverter nach Anspruch 1 oder 2, dadurch gekennzeichnet, daß die Auskleidung als Rohr (14, 36) ausgebildet ist (Fig. 1, 4).

4. Stahlwerkskonverter nach Anspruch 3, dadurch gekennzeichnet, daß das innenseitige Ende (16) des Rohres (14) an einer Schulter (17) eines feuerfesten Ausmauerungssteines (9) des metallurgischen Gefäßes (3) abgestützt ist (Fig. 1, 2).

5. Stahlwerkskonverter nach Anspruch 3 oder 4, dadurch gekennzeichnet, daß das außenseitige Ende (19) des Rohres (14, 36) gegenüber dem Mantel des metallurgischen Gefäßes (3) mittels einer feuerfesten Stampfmasse (18) abgestützt ist (Fig. 1, 4).

6. Stahlwerkskonverter nach einem oder mehreren der Ansprüche 1 bis 5, dadurch gekennzeichnet, daß die Sondenöffnung (1) mit einem Deckel (21) verschließbar ist.

7. Stahlwerkskonverter nach Anspruch 6, dadurch gekennzeichnet, daß der Deckel (21) am Mantel des metallurgischen Gefäßes (3) schwenkbar befestigt ist.

8. Stahlwerkskonverter nach Anspruch 6 oder 7, dadurch gekennzeichnet, daß der Deckel (21) mittels eines Druckmittelzylinders betätigbar ist.

9. Metallurgisches Gefaß nach einem oder mehreren der Ansprüche 6 bis 8, dadurch gekennzeichnet, daß der Deckel (21) mittels eines Riegels (24) fixierbar ist, der vorzugsweise ebenfalls mittels eines Druckmittelzylinders betätigbar ist.

10. Stahlwerkskonverter nach den Ansprüchen 1 und 3, dadurch gekennzeichnet, daß das Rohr (36) sich etwa über die gesamte Länge der Sondenöffnung (1) bis zum Innenraum des metallurgischen Gefäßes (3) erstreckt und aus zwei oder mehr Rohrteilen (36', 36'') zusammengesetzt ist, wobei die zueinander gerichteten Enden der Rohrteile (36', 36'') mit einander in Richtung quer zur Längsachse (40) zumindest teilweise überdeckenden Stirnflächen (38, 39) versehen sind (Fig. 4).

11. Stahlwerkskonverter nach Anspruch 10, dadurch gekennzeichnet, daß die Stirnflächen als Kegelmantelflächen (38, 39) ausgebildet sind, deren Erzeugende mit der Längsachse (40) einen Winkel (41) zwischen 30 und 60°, vorzugsweise einen Winkel (41) von 45°, einschließen.

12. Stahlwerkskonverter nach Anspruch 11, dadurch gekennzeichnet, daß die Kegelmantelflächen (38, 39) zweier zueinander gewendeter Endteile der Rohrteile (36', 36'') denselben Öffnungswinkel aufweisen und daß die Spitze des die Kegelmantelflächen (38, 39) bildenden Kegels zum Innenraum (37) des metallurgischen Gefäßes (3) gerichtet ist.

13. Stahlwerkskonverter nach einem oder mehreren der Ansprüche 10 bis 12, dadurch gekennzeichnet, daß der dem Innenraum (37) des metallurgischen Gefäßes (3) nächstliegende Rohrteil (36'') außenseitig mit einem eine Stützschulter (44) bildenden Ringwulst (43) versehen ist.

14. Stahlwerkskonverter nach einem oder mehreren der Ansprüche 10 bis 13, dadurch gekennzeichnet, daß die Rohrteile (36', 36'') zylindrische Innenräume aufweisen und der Innendurchmesser (46) eines näher dem Innenraum (37) des metallurgischen Gefäßes (3) angeordneten Rohrteiles (36") größer bemessen ist als der Innendurchmesser (47) eines weiter außen liegenden Rohrteiles (36').

15. Stahlwerkskonverter nach Anspruch 14, dadurch gekennzeichnet, daß der Innendurchmessersprung von Rohr- zu Rohrteil (36', 36'') zwischen 1 bis 3 cm, vorzugsweise etwa 2 cm, beträgt.

16. Stahlwerkskonverter nach einem der Ansprüche 1-15, dadurch gekennzeichnet, daß in die Sondenöffnung (1) ein Stopfen (28, 49) aus Graphit oder aus einem Graphit/Tonerde-Gemisch einsetzbar und in eingesetzter Stellung fixierbar ist (Fig. 3, 5).

17. Stahlwerkskonverter nach Anspruch 16, dadurch gekennzeichnet, daß das innere Stopfenende (34) mindestens bis in einen Temperaturbereich der feuerfesten Ausmauerung (6, 7, 18) mit einer Temperatur von etwa 1200°C ragt.

18. Stahlwerkskonverter nach Anspruch 16 oder 17, dadurch gekennzeichnet, daß das innere Stopfenende (34) höchstens bis in einen Bereich derfeuerfesten Ausmauerung (6, 7, 18) mit einer Temperatur von etwa 1300⁰C ragt (Fig. 3).

19. Stahlwerkskonverter nach einem oder mehreren der Ansprüche 16 bis 18, dadurch gekennzeichnet, daß der Stopfen (28) an einer Führungsstange (29) befestigt ist, an der im Abstand zum Stopfen (28) ein am Mantel des metallurgischen Gefäßes (3) anliegender Anschlag (31) vorgesehen ist (Fig. 3).

20. Stahlwerkskonverter nach Anspruch 19, dadurch gekennzeichnet, daß der Anschlag (31) entlang der Führungsstange (29) verschiebbar und an der Führungsstange (29) fixierbar ist.

21. Stahlwerkskonverter nach Anspruch 19 oder 20, dadurch gekennzeichnet, daß der Anschlag als Deckel (31) ausgebildet ist.

22. Stahlwerkskonverter nach einem oder mehreren der Ansprüche 19 bis 21, dadurch gekennzeichnet, daß der Anschlag (31) an der zum Inneren des metallurgischen Gefäßes gewendeten Seite mit einem Zentrierfortsatz (35) versehen ist.

23. Stahlwerkskonverter nach einem oder mehreren der Ansprüche 19 bis 22, dadurch gekennzeichnet, daß der Anschlag (31) mittels eines Riegels (29), der vorzugsweise mittels eines Druckmittelzylinders betätigbar ist, am Mantel des metallurgischen Gefäßes (3) fixierbar ist.

24. Stahlwerkskonverter nach einem oder mehreren der Ansprüche 19 bis 23, dadurch gekennzeichnet, daß die Führungsstange (29) mittels eines Druckmittelzylinders betätigbar ist.

25. Stahlwerkskonverter nach Anspruch 16, dadurch gekennzeichnet, daß der Stopfen (49) sich über die gesamte Länge der Sondenöffnung (1) erstreckt (Fig. 5).

26. Stahlwerkskonverter nach Anspruch 25, dadurch gekennzeichnet, daß das der Gefäßinnenseite (42) des metallurgischen Gefäßes (3) zugewandte Ende (50) des Stopfens (49) eine dieser Gefäßinnenseite (42) angepaßte Stirnfläche aufweist.

27. Stahlwerkskonverter nach Anspruch 25 oder 26, dadurch gekennzeichnet, daß das nach außen ragende Ende des Stopfens (49) mit einem metallischen Einsatz (51) versehen ist, der eine Kupplungseinrichtung (53, 54) zum Ankuppeln einer Stopfenmanipulationseinrichtung aufweist.

28. Stahlwerkskonverter nach Anspruch 27, dadurch gekennzeichnet, daß der metallische Einsatz (41) einen die Sondenöffnung (1) übergreifenden Ringwulst (52) aufweist.

29. Stahlwerkskonverter nach einem oder mehreren der Ansprüche 25 bis 28, dadurch gekennzeichnet, daß der Außendurchmesser des Stopfens (49) um etwa 3 bis 15%, insbesondere 5%, geringer bemessen ist als der Innendurchmesser der Sondenöffnung (1).

30. Stahlwerkskonverter nach einem oder mehreren der Ansprüche 1 bis 15, dadurch gekennzeichnet, daß das Graphit/Tonerde-Gemisch aus 60 bis 85 % Graphit, Rest Al₂O₃ und Schamotte besteht.

31. Stahlwerkskonverter nach einem oder mehreren der Ansprüche 16 bis 29, dadurch gekennzeichnet, daß das Graphit/Tonerde-Gemisch aus 5 bis 20 % Graphit, 30 bis 70 % Al₂O₃, Rest Schamotte besteht.

## Claims

1. A steel works converter (3) having a refractory brick-work (6, 7, 18) and a probe opening (1) extending through a wall (2) of the converter for introducing a measuring and/or sampling probe, characterised in that the probe opening (1) is provided with a lining (14, 36) of graphite or of a graphite/alumina mixture whose outer surface directly contacts the refractory material of the brick-work, wherein the inner end (16) of the lining (14) projects at least into a region of the refractory brick-work (6, 7, 18) having a temperature of approximately 1200°C.

2. A steel works converter according to claim 1, characterised in that the inner end (16) of the lining (14), at most, projects into a region of the refractory brick-work (6, 7, 18) having a temperature of approximately 1300°C (Figs. 1, 2).

3. A steel works converter according to claim 1 or 2, characterised in that the lining is designed as a pipe (14, 36) (Figs. 1, 4).

4. A steel works converter according to claim 3, characterised in that the inward end (16) of the pipe (14) is supported on a shoulder (17) of a refractory brick-work block (9) of the metallurgical vessel (3) (Figs. 1, 2).

5. A steel works converter according to claim 3 or 4, characterised in that the outward end (19) of the pipe (14, 36) is supported relative to the jacket of the metallurgical vessel (3) by means of a refractory ramming mass (18) (Figs. 1, 4).

6. A steel works converter according to one or several of claims 1 to 5, characterised in that the probe opening (1) is closable by a lid (21).

7. A steel works converter according to claim 6, characterised in that the lid (21) is pivotably fastened to the jacket of the metallurgical vessel (3).

8. A steel works converter according to claim 6 or 7, characterised in that the lid (21) is actuatable by means of a pressure medium cylinder.

9. A metallurgical vessel according to one or several of claims 6 to 8, characterised in that the lid (21) is fixable by means of a bolt (24) which preferably is also actuatable by means of a pressure medium cylinder.

10. A steel works converter according to claims 1 and 3, characterised in that the pipe (36) extends approximately over the entire length of the sample opening (1) to the inner space of the metallurgical vessel (3) and is assembled of two or more pipe portions (36', 36''), the ends of the pipe portions (36', 36'') facing each other being provided with front faces (38, 39) which at least partially overlap in the direction transverse to the longitudinal axis (40) (Fig. 4).

11. A steel works converter according to claim 10, characterised in that the front faces are designed as envelope-of-cone faces (38, 39), whose generatrices enclose an angle (41) of between 30 and 60°, preferably an angle (41) of 45°, with the longitudinal axis (40).

12. A steel works converter according to claim 11, characterised in that the envelope-of-cone faces (38, 39) of two end parts of the pipe portions (36', 36'') facing each other have the same angle of aperture and that the tip of the cone forming the envelope-of-cone faces (38, 39) is directed towards the interior (37) of the metallurgical vessel (3).

13. A steel works converter according to one or several of claims 10 to 12, characterised in that on its outer side, the pipe portion (36'') arranged next to the interior (37) of the metallurgical vessel (3) is provided with an annular bead (43) forming a supporting shoulder (44).

14. A steel works converter according to one or several of claims 10 to 13, characterised in that the pipe portions (36', 36'') have cylindrical interiors and that the inner diameter (46) of a pipe portion (36'') arranged more closely to the interior (37) of the metallurgical vessel (3) is dimensioned larger than the inner diameter (47) of a pipe portion (36') arranged farther outwardly.

15. A steel works converter according to claim 14, characterised in that the difference in diameter from one pipe portion to another pipe portion (36', 36'') is between 1 and 3 cm, preferably approximately 2 cm.

16. A steel works converter according to one of claims 1 to 15, characterised in that a plug (28, 49) of graphite or of a graphite/alumina mixture is insertable in the probe opening (1) and fixable in the inserted position (Figs. 3, 5).

17. A steel works converter according to claim 16, characterised in that the inner plug end (34) projects at least to a temperature region of the refractory brick-work (6, 7, 18) having a temperature of approximately 1200°C.

18. A steel works converter according to claim 16 or 17, characterised in that the inner plug end (34), at the most, projects into a region of the refractory brick-work (6, 7, 18) having a temperature of approximately 1300°C (Fig. 3).

19. A steel works converter according to one or several of claims 16 to 18, characterised in that the plug (28) is fastened to a guide rod (29) on which a stop (31) abutting on the jacket of the metullurgical vessel (3) is provided at a distance from the plug (28) (Fig. 3).

20. A steel works converter according to claim 19, characterised in that the stop (31) is displaceable along the guide rod (29) and fixable on the guide rod (29).

21. A steel works converter according to claim 19 or 20, characterised in that the stop is designed as a lid (31).

22. A steel works converter according to one or several of claims 19 to 21, characterised in that the stop (31) is provided with a centering projection (35) on its side facing the interior of the metallurgical vessel.

23. A steel works converter according to one or several of claims 19 to 22, characterised in that the stop (31) is fixable on the jacket of the metallurgical vessel (3) by mans of a bolt (29), which bolt preferably is actuatable by means of a pressure medium cylinder.

24. A steel works converter according to one or several of claims 19 to 23, characterised in that the guide rod (29) is actuatable by means of a pressure medium cylinder.

25. A steel works converter according to claim 16, characterised in that the plug (49) extends over the entire length of the probe opening (1) (Fig. 5).

26. A steel works converter according to claim 25, characterised in that the end (50) of the plug (49) facing the vessel interior (42) of the metallurgical vessel (3) has a front face adapted to this vessel interior (42).

27. A steel works converter according to claim 25 or 26, characterised in that the outwardly projecting end of the plug (49) is provided with a metal insert (51) having a coupling means (53, 54) to be coupled with a plug manipulation means.

28. A steel works converter according to claim 27, characterised in that the metallic insert (51) has an annular bead (52) which extends over the probe opening (1).

29. A steel works converter according to one or several of claims 25 to 28, characterised in that the outer diameter of the plug (49) is dimensioned to be smaller than the inner diameter of the probe opening (1) by approximately 3 to 15%, in particular by 5%.

30. A steel works converter according to one or several of claims 1 to 15, characterized in that the graphite/alumina mixture is comprised of from 60 to 85% of graphite, balance Al₂O₃ and fireclay.

31. A steel works converter according to one or several of claims 16 to 29, characterized in that the graphite/alumina mixture is comprised of from 5 to 20% graphite, from 30 to 70% of Al₂O₃, balance fireclay.

## Revendications

1. Convertisseur d'aciérie (3), comprenant un garnissage réfractaire (6, 7, 18) et une ouverture de sonde (1) qui traverse la paroi (2) du convertisseur afin d'introduire une sonde de mesure et/ou de prélèvement d'échantillon, caractérisé en ce que l'ouverture de sonde (1) est pourvue d'un revêtement (14, 36) en graphite ou en mélange graphite/alumine, qui est en contact direct par sa surface extérieure contre le matériau réfractaire du garnissage, et en ce que l'extrémité intérieure (16) du revêtement (14) pénètre au moins jusque dans une région du garnissage réfractaire (6, 7, 18) avec une température d'environ (1200°C).

2. Convertisseur d'aciérie selon la revendication 1, caractérisé en ce que l'extrémité intérieure (16) du revêtement (14) pénètre tout au plus jusque dans une région du garnissage réfractaire (6, 7, 18) avec une température d'environ 1300°C (figs. 1 et 2).

3. Convertisseur d'aciérie selon l'une ou l'autre des revendications 1 et 2, caractérisé en ce que le revêtement est réalisé sous la forme d'un tube (14, 36)(figs. 1, 4).

4. Convertisseur d'aciérie selon la revendication 3, caractérisé en ce que l'extrémité intérieure (16) du tube (14) est appuyée contre un épaulement (17) d'un bloc réfractaire (9) du garnissage du récipient métallurgique (3).

5. Convertisseur d'aciérie selon l'une ou l'autre des revendications 3 et 4, caractérisé en ce que l'extrémité extérieure (19) du tube (14, 36) est supportée vis-a-vis de l'enveloppe du récipient métallurgique (3) au moyen d'un pisé réfractaire damé (18) (figs. 1, 4).

6. Convertisseur d'aciérie selon l'une ou plusieurs des revendications 1 à 5, caractérisé en ce que l'ouverture de sonde (1) est susceptible d'être obturée par un couvercle (21).

7. Convertisseur d'aciérie selon la revendication 6, caractérisé en ce que le couvercle (21) est fixé de façon pivotante sur l'enveloppe du récipient métallurgique (3).

8. Convertisseur d'aciérie selon l'une ou l'autre des revendications 6 et 7, caractérisé en ce que le couvercle (21) est susceptible d'être actionné au moyen d'un cylindre à fluide sous pression.

9. Convertisseur d'aciérie selon l'une ou plusieurs des revendications 6 à 8, caractérisé en ce que le couvercle (21) est susceptible d'être fixé au moyen d'un verrou (24) qui est de préférence susceptible d'être actionné également au moyen d'un cylindre à fluide sous pression.

10. Convertisseur d'aciérie selon les revendications 1 et 3, caractérisé en ce que le tube (36) s'étend approximativement sur la longueur totale de l'ouverture de sonde (1) jusqu'à l'espace intérieur du récipient métallurgique (3), et se compose de deux parties de tube (36', 36'') ou plus, les extrémités des parties de tubes (36', 36'') dirigées l'une vers l'autre étant pourvues de surfaces frontales (38, 39) qui se recouvrent au moins partiellement l'une l'autre en direction transversale à l'axe longitudinal (40) (fig. 4).

11. Convertisseur d'aciérie selon la revendication 10, caractérisé en ce que les surfaces frontales sont réalisées sous la forme de surfaces enveloppe coniques (38, 39) dont les génératrices forment avec l'axe longitudinal (40) un angle (41) compris entre 30 et 60°, de préférence un angle (41) de 45°.

12. Convertisseur d'aciérie selon la revendication 11, caractérisé en ce que les surfaces enveloppe coniques (38, 39) de deux parties d'extrémités orientées l'une vers l'autre des parties de tube (36', 36'') forment le même angle d'ouverture, et en ce que la pointe du cône qui forme les surfaces d'enveloppe coniques (38, 39) est dirigée vers l'espace intérieur (37) du récipient métallurgique (3).

13. Convertisseur d'aciérie selon l'une ou plusieurs des revendications 10 à 12, caractérisé en ce que la partie de tube (36'') située au plus près de l'espace intérieur (37) du récipient métallurgique (3) est pourvue du côté extérieur d'un bourrelet annulaire (43) formant un épaulement d'appui (44).

14. Convertisseur d'aciérie selon l'une ou plusieurs des revendications 10 à 13, caractérisé en ce que les parties de tube (36', 36'') présentent des espaces intérieurs cylindriques, et en ce que le diamètre intérieur (46) d'une partie de tube (36'') agencée plus près de l'espace intérieur (37) du récipient métallurgique (3) est choisi supérieur au diamètre intérieur (47) d'une partie de tube (36') située p]us loin vers l'extérieur.

15. Convertisseur d'aciérie selon la revendication 14, caractérisé en ce que l'écart de diamètre intérieur entre l'une et l'autre des parties de tube (36', 36'') est compris entre un et trois centimètres, et s'élève de préférence à environ 2 cm.

16. Convertisseur d'aciérie selon l'une quelconque des revendications 1 à 5, caractérisé en ce qu'il est prévu un bouchon (28, 49) en graphite ou en mélange graphite/alumine susceptible d'être mis en place dans l'ouverture de sonde (1) et d'être fixé dans la position de mise en place (figs. 3, 5).

17. Convertisseur d'aciérie selon la revendication 16, caractérisé en ce que l'extrémité intérieure (34) du bouchon s'étend au moins jusque dans une région du garnissage réfractaire (6, 7, 18) avec une température d'environ 1200°C.

18. Convertisseur d'aciérie selon l'une ou l'autre des revendications 16 ou 17, caractérisé en ce que l'extrémité intérieure (34) du bouchon s'étend tout au plus jusque dans une région du mur extérieur réfractaire (6, 7, 18) avec une température d'environ 1300°C (fig. 3).

19. Convertisseur d'aciérie selon l'une ou plusieurs des revendications 16 à 18, caractérisé en ce que le bouchon (28) est fixé sur une tige de guidage (29) sur laquelle est prévue une butée (31) en contact contre l'enveloppe du récipient métallurgique (3) à distance du bouchon (28) (fig. 3).

20. Convertisseur d'aciérie selon la revendication 19, caractérisé en ce que la butée (39) est susceptible d'être déplacée le long de la tige de guidage (29), et d'être fixée sur la tige de guidage (29).

21. Convertisseur d'aciérie selon l'une ou l'autre des revendications 19 ou 20, caractérisé en ce que la butée est réalisée sous la forme d'un couvercle (31).

22. Convertisseur d'aciérie selon l'une ou plusieurs des revendications 19 à 21, caractérisé en ce que la butée (31) est dotée d'un prolongement de centrage (35) sur le côté tourné vers l'intérieur du récipient métallurgique.

23. Convertisseur d'aciérie selon l'une ou plusieurs des revendications 19 à 22, caractérisé en ce que la butée (31) est susceptible d'être fixée contre l'enveloppe du récipient métallurgique (3) au moyen d'un verrou (29), lequel peut de préférence être actionné au moyen d'un cylindre à fluide sous pression.

24. Convertisseur d'aciérie selon l'une ou plusieurs des revendications 19 à 23, caractérisé en ce que la tige de guidage (29) est susceptible d'être actionnée au moyen d'un cylindre à fluide sous pression.

25. Convertisseur d'aciérie selon la revendication 16, caractérisé en ce que le bouchon (49) s'étend sur la longueur totale de l'ouverture de sonde (1) (fig. 5).

26. Convertisseur d'aciérie selon la revendication 5, caractérisé en ce que l'extrémité (50) du bouchon (49) orientée vers le côté intérieur (42) du récipient métallurgique (3) présente une surface frontale ajustée à ce côté intérieur (42) du récipient.

27. Convertisseur d'aciérie selon l'une ou l'autre des revendications 25 ou 26, caractérisé en ce que l'extrémité du bouchon (49) qui dépasse vers l'extérieur est dotée d'un insert métallique (51) qui comporte un organe d'accouplement (53, 54) afin d'accoupler un dispositif de manipulation pour le bouchon.

28. Convertisseur d'aciérie selon la revendication 27, caractérisé en ce que l'insert métallique (41) comporte un bourrelet annulaire (52) qui recouvre l'ouverture de sonde (1).

29. Convertisseur d'aciérie selon l'une ou plusieurs des revendications 25 à 28, caractérisé en ce que le diamètre extérieur du bouchon (49) est choisi inférieur, d'environ à 3 à 15% et en particulier de 5%, au diamètre intérieur de l'ouverture de sonde (1).

30. Convertisseur d'aciérie selon l'une ou plusieurs des revendications 1 à 15, caractérisé en ce que le mélange graphite/alumine est constitué de 60 à 85% de graphite, le reste étant du Al₂O₃ et de la chamotte.

31. Convertisseur d'aciérie selon l'une ou plusieurs des revendications 6 à 29, caractérisé en ce que le mélange graphite/alumine est constitué de 5 à 20% de graphite, 30 à 70% de Al₂O₃, le reste étant de la chamotte.
